# EUROPEAN PATENT APPLICATION

(11) **EP 3 001 553 A1**
(43) Date of publication of application: **30.03.2016**
(21) Application number: 14186365.4
(22) Date of filing: 25.09.2014
(51) Int. Cl.: H02M 1/32, H02M 7/219, H02J 3/38

(54) **Electric assembly**

(71) Applicant: ABB Oy, 00380 Helsinki (FI)
(72) Inventor: Pavlou, Kostas, 00380 Helsinki (FI)
(74) Representative: Kolster Oy Ab

(57) **Abstract**

An electric assembly comprising an alternating current source (2) having an output, and a converter system (4) having a rectifier circuit (42) and a direct current intermediate circuit (44), the rectifier circuit (42) including a plurality of controllable switches (S1 - S6) and being conductively connected to the output of the alternating current source (2), the rectifier circuit (42) being adapted to rectify alternating current received from the output of the alternating current source (2) and to supply the direct current into the direct current intermediate circuit (44). The electric assembly comprises a clamping circuit (6) connected electrically between the output of the alternating current source (2) and the direct current intermediate circuit (44), the clamping circuit (6) comprises an uncontrolled rectifier adapted to rectify alternating current received from the output of the alternating current source (2) and to supply the direct current into the direct current intermediate circuit (44).

## Description

### FIELD OF THE INVENTION

The present invention relates to an electric assembly comprising an alternating current source and a rectifier circuit.

Line-to-line or line-to-ground voltage peaks occurring in an electric assembly may put qualitative operation of the electric assembly under question, and on the other hand, may decrease lifetime of the electric assembly significantly. Harmful voltage peaks occur for example in wind power plants in which an alternating current generator is located at the top of a tower and a rectifier circuit including a plurality of controllable switches is located at the foot of the tower. A known solution to this voltage peak problem is to connect a du/dt filter to the rectifier circuit.

A du/dt filter improves slope and peak value during voltage risings and fallings. A du/dt filter is connected at the AC side of a rectifier circuit of an electric assembly. The rectifier circuit is typically part of a frequency converter. In many electric assemblies a du/dt filter is effective enough. However, in some applications such as in wind power plants implementation of a du/dt filter is not a straightforward task. An effective design of a du/dt filter may be a very complex procedure with several aspects arising, such as the length of the connection cables, number of the parallel connected cables per phase, and the chosen geometry of the connection cables from the electric generator in the nacelle down to the bottom of the tower. Further, mutual inductances and mutual capacitances must be considered.

A finite element analysis of an electric assembly may be used for designing a du/dt filter. Nevertheless, despite use of a finite element analysis a du/dt filter does not eliminate voltage peaks effectively in all electric assemblies. For example, in an electric assembly comprising a pulse width modulation (PWM) frequency converter a variable switching frequency of a PWM rectifier incurs a mismatch between a finite model and a real cable between an alternating current source and the PWM rectifier. Also, nonsynchronized switching transitions between the PWM rectifier and a PWM inverter cause fluctuations to a DC bus voltage, which causes disturbance on AC sides of the PWM rectifier and PWM inverter.

### BRIEF DESCRIPTION OF THE INVENTION

An object of the present invention is to provide an electric assembly so as to overcome the above problems relating to voltage peaks. The objects of the invention are achieved by an electric assembly which is characterized by what is stated in the independent claim 1. The preferred embodiments of the invention are disclosed in the dependent claims.

The invention is based on the idea of providing an electric assembly comprising a direct current intermediate circuit supplied by an alternating current source through a controlled rectifier circuit with a clamping circuit connected electrically between the alternating current source and the direct current intermediate circuit, the clamping circuit comprising an uncontrolled rectifier. The clamping circuit eliminates all voltage peaks at output of the alternating current source which exceed a negative voltage -V_{DC} or a positive voltage +V_{DC}, wherein voltages -V_{DC} and +V_{DC} are voltages of the direct current intermediate circuit.

An advantage of the electric assembly of the invention is that design of the clamping circuit is independent from length and type of conductors connecting an output of an alternating current source and a rectifier circuit supplying a direct current intermediate circuit. Further, design of the clamping circuit is independent from switching frequency of the rectifier circuit supplying the direct current intermediate circuit. An electric assembly according to the invention does not require a du/dt filter even if conductors connecting the output of the alternating current source and the rectifier circuit are over 100 metres long.

### BRIEF DESCRIPTION OF THE DRAWINGS

In the following the invention will be described in greater detail by means of preferred embodiments with reference to the attached drawings, in which
Figure 1 shows an electric assembly according to an embodiment of the invention; and
Figure 2 shows a wind power plant comprising the electric assembly of Figure 1.

### DETAILED DESCRIPTION OF THE INVENTION

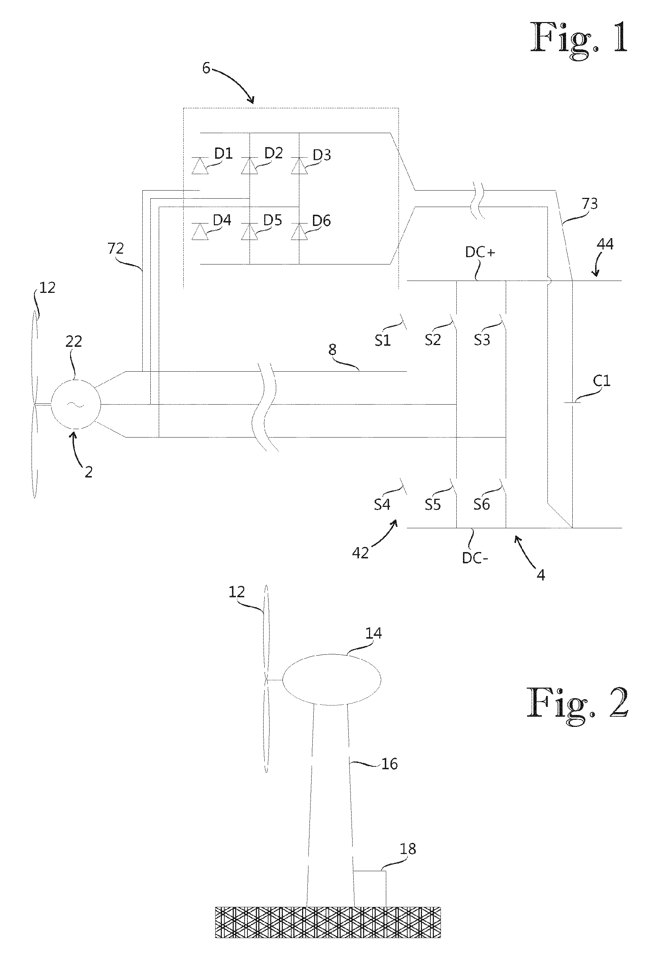

Figure 1 shows an electric assembly comprising an alternating current source 2, a converter system 4 and a clamping circuit 6. The alternating current source 2 has an output adapted to supply alternating current. The converter system 4 is a voltage source converter and has a rectifier circuit 42 and a direct current intermediate circuit 44. The rectifier circuit 42 includes a plurality of controllable switches S1 to S6 and is conductively connected to the output of the alternating current source 2. The rectifier circuit 42 is adapted to rectify alternating current received from the output of the alternating current source 2 and to supply the direct current into the direct current intermediate circuit 44. The clamping circuit 6 is connected electrically between the output of the alternating current source 2 and the direct current intermediate circuit 44. The clamping circuit 6 comprises an uncontrolled rectifier adapted to rectify alternating current received from the output of the alternating current source 2 and to supply the direct current into the direct current intermediate circuit 44.

The uncontrolled rectifier of the clamping circuit 6 is a six-pulse diode bridge rectifier comprising diodes D1 to D6. In an alternative embodiment an uncontrolled rectifier of a clamping circuit is an uncontrolled rectifier of another type. As an example in an embodiment in which the alternating current source is a single-phase alternating current source the uncontrolled rectifier may comprise a full-wave rectifier using four diodes.

The alternating current source 2 comprises a three-phase alternating current generator 22 of a wind turbine. The conductive connection between the output of the alternating current source 2 and the rectifier circuit 42 comprises first conductors 8 the length of which is at least 50 metres. In an alternative embodiment a conductive connection between an output of an alternating current source and a rectifier circuit comprises at least one first conductor the length of which is at least 100 metres. However, a clamping circuit according to the invention may also be used in electric assemblies in which conductive connection between an output of an alternating current source and a rectifier circuit is shorter than 50 metres.

The controllable switches S1 to S6 are semiconductor switches. In an embodiment controllable switches of the rectifier circuit are thyristors. Herein a controllable switch is a switch whose operational state can be changed by a control signal. An uncontrolled rectifier rectifies alternating current without controllable switches, for example by diodes.

The converter system 4 comprises a PWM frequency converter wherein the rectifier circuit 42 is a PWM rectifier. An inverter circuit of the PWM frequency converter is connected to a positive bus bar DC+ of the direct current intermediate circuit 44 and a negative bus bar DC- of the direct current intermediate circuit 44. The inverter circuit is not depicted in Figure 1.

The direct current intermediate circuit 44 comprises a capacitor C1 adapted to smooth the direct current supplied into the direct current intermediate circuit. The capacitor C1 is connected electrically between the positive bus bar DC+ and the negative bus bar DC-.

The output of the alternating current source 2 is conductively connected to the clamping circuit 6 with three second conductors 72. During operation of the electric assembly an alternating current flows in the second conductors 72. The clamping circuit 6 is conductively connected to the direct current intermediate circuit 44 with two third conductors 73. One of the third conductors is a positive conductor connected to the positive bus bar DC+ while the other is a negative conductor connected to the negative bus bar DC-. During operation of the electric assembly a direct current flows in the third conductors 73.

In an embodiment third conductors conductively connecting a clamping circuit and a rectifier circuit are substantially longer than second conductors conductively connecting an output of an alternating current source and the clamping circuit. In case of a wind power plant the clamping circuit may be located in a nacelle of the wind power plant while a rectifier circuit may be located at a foot of the tower.

Figure 2 shows a wind power plant comprising the electric assembly of Figure 1. The wind power plant comprises rotor blades 12, an alternating current generator, a nacelle 14, a tower 16 and an electrical device compartment 18. The wind power plant is adapted to convert kinetic energy of wind into electrical power. The rotor blades 12 are adapted to rotate the alternating current generator.

The clamping circuit is located in the nacelle 14. The rectifier circuit 42 is located in the electrical device compartment 18. The electrical device compartment 18 lies substantially at ground level. In an alternative embodiment an electrical device compartment does not comprise a separate building but is integrated inside the tower.

It will be obvious to a person skilled in the art that the inventive concept can be implemented in various ways. The invention and its embodiments are not limited to the examples described above but may vary within the scope of the claims.

## Claims

1. An electric assembly comprising:
an alternating current source (2) having an output adapted to supply alternating current; and
a converter system (4) having a rectifier circuit (42) and a direct current intermediate circuit (44), the rectifier circuit (42) including a plurality of controllable switches (S1 - S6) and being conductively connected to the output of the alternating current source (2), the rectifier circuit (42) being adapted to rectify alternating current received from the output of the alternating current source (2) and to supply the direct current into the direct current intermediate circuit (44),
**characterized in that** the electric assembly comprises a clamping circuit (6) connected electrically between the output of the alternating current source (2) and the direct current intermediate circuit (44), the clamping circuit (6) comprises an uncontrolled rectifier adapted to rectify alternating current received from the output of the alternating current source (2) and to supply the direct current into the direct current intermediate circuit (44).

2. An electric assembly according to claim 1, **characterized in that** the uncontrolled rectifier comprises a plurality of diodes (D1 - D6).

3. An electric assembly according to claim 1 or 2, **characterized in that** the conductive connection between the output of the alternating current source (2) and the rectifier circuit (42) comprises at least one first conductor (8) the length of which is at least 50 metres.

4. An electric assembly as claimed in any one of the preceding claims, **characterized in that** the electric assembly comprises at least one second conductor (72) conductively connecting the output of the alternating current source (2) and the clamping circuit (6), and at least one third conductor (73) conductively connecting the clamping circuit (6) and the direct current intermediate circuit (44), the at least one third conductor (73) being substantially longer than the at least one second conductor (72).

5. An electric assembly as claimed in any one of the preceding claims, **characterized in that** the rectifier circuit (42) is a pulse width modulation rectifier circuit.

6. An electric assembly as claimed in any one of the preceding claims, **characterized in that** the alternating current source (2) comprises an alternating current generator (22).

7. An electric assembly as claimed in any one of the preceding claims, **characterized in that** the alternating current source (2) is a three-phase alternating current source.

8. A wind power plant comprising rotor blades (12), an alternating current generator (22), a nacelle (14), a tower (16) and an electric assembly, **characterized in that** the electric assembly is an electric assembly according to any one of claims 1 to 7, wherein the alternating current generator (22) of the wind power plant is the alternating current source of the electric assembly.
